# EUROPEAN PATENT APPLICATION

(11) **EP 4 738 562 A1**
(43) Date of publication of application: **06.05.2026**
(21) Application number: 24210890.0
(22) Date of filing: 05.11.2024
(51) Int. Cl.: H01M 50/204, H01M 50/244, H01M 50/262, H01M 50/264, H01M 50/242, H01M 50/289, H01M 50/507, H01M 50/209

(54) **A BATTERY PACK AND A VEHICLE**

(71) Applicant: Volvo Truck Corporation, 405 08 Göteborg (SE)
(72) Inventor: Rout, Dhirendra, 422 54 Göteborg (SE); Irannezhad, Mike, 413 30 Göteborg (SE); Jonsson, Kasper, 417 57 Göteborg (SE)
(74) Representative: Kransell & Wennborg KB

(57) **Abstract**

The disclosure relates to a battery pack (4), the battery pack (4) comprising a plurality of battery layers (6) stacked on top of each other, wherein a respective battery layer of at least a first and a second adjacently stacked battery layer (61, 62) of the plurality of battery layers (6) comprises:
- a plurality of cell stacks (8), each comprising a plurality of battery cells (9) stacked together,
- a base plate (10), wherein the plurality of cell stacks (8) are arranged on the base plate (10),
- a frame arrangement (12), mechanically connected to the base plate (10), and enclosing the plurality of cell stacks (8). The disclosure also relates to a vehicle (2).

## Description

### TECHNICAL FIELD

The disclosure relates generally to energy storage systems. In particular aspects, the disclosure relates to a battery pack and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery pack typically comprises a plurality of battery cells, i.e., electrochemical battery cells, which are electrically connected in series and/or in parallel. The battery pack may comprise one or more separate battery cell stacks. The battery cells may be prismatic battery cells or cylindrical battery cells.

Due to the electrification trend, such as for vehicles, there is an ongoing strive to develop improved technology relating to battery packs, such as to provide cost-effective configurations which are reliable, robust and/or space efficient.

### SUMMARY

According to a first aspect of the disclosure, a battery pack is provided. The battery pack has a first extension along a first axis, a second extension along a second axis, and a third extension along a third axis, wherein the first, second, and third axes are perpendicular. The battery pack comprises a plurality of battery layers stacked on top of each other along the third axis, wherein a respective battery layer of at least a first and a second adjacently stacked battery layer of the plurality of battery layers comprises:
- a plurality of cell stacks, each comprising a plurality of battery cells stacked together,
- a base plate, wherein the plurality of cell stacks are arranged on the base plate,
- a frame arrangement, mechanically connected to the base plate, and enclosing the plurality of cell stacks, as seen in a sectional plane which is perpendicular to the third axis, wherein the frame arrangement comprises:
- a pair of side walls extending along the first axis, wherein the cell stacks are located between the pair of side walls along the second axis,
- a pair of end members, extending along the second axis, and mechanically connecting the pair of side walls, and wherein the plurality of cell stacks are located between the pair of end members. The first aspect of the disclosure may seek to provide a cost-effective battery pack configuration which is reliable, robust and/or space efficient. A technical benefit may include that the frame arrangements as disclosed herein provide an efficient protection for the battery cells, such as the frame arrangements of the plurality of battery layers may together at least partly form an outer cover of the battery pack which is sealed from an external environment.

Optionally in some examples, including in at least one preferred example, the first and second battery layers are connected via a sealed connection interface,
wherein the base plate of one of the first and second battery layers is arranged at the sealed connection interface, and
wherein the sealed connection interface is configured such that:
   the first and second battery layers are mechanically connected to one another via their frame arrangements, and
   the sealed connection interface is completely enclosing the base plate which is arranged at the sealed connection interface, as seen in a sectional plane which is perpendicular to the third axis. A technical benefit may include that a cell to pack configuration is achieved wherein a risk of leakage into the battery pack at the intersection between the battery layers is mitigated. By way of example, by arranging the base plate which is arranged at the sealed connection interface so that it is completely provided inside the battery pack, i.e., also inside the sealed connection interface, a more reliable cell to pack configuration may be achieved.

Optionally in some examples, including in at least one preferred example, for at least one battery layer of the first and second battery layers, the plurality of battery cells of the respective cell stack are stacked along the second axis, and wherein the plurality of cell stacks are arranged along the first axis. A technical benefit may include that an efficient packaging of the battery cells is achieved, e.g., resulting in high energy density. Additionally, or alternatively, a technical benefit may include that any swelling forces from the respective battery cell stack may be accommodated by the same structural component(s) for each battery cell stack, i.e. by the pair of side walls. This may imply a more rigid battery pack configuration, e.g., allowing the battery pack to be longer along the first axis without negatively affecting the rigidity of the battery pack too much.

Optionally in some examples, including in at least one preferred example, the battery cells may comprise prismatic battery cells. Additionally, or alternatively, the battery cells may comprise cylindrical battery cells. The prismatic battery cell may comprise a top surface, a bottom surface and four intermediate side surfaces connecting the top surface and the bottom surface. The prismatic battery cell may be box shaped. The use of prismatic battery cells stacked in battery cell stacks may result in a battery pack configuration with high energy density. In some examples, at least one prismatic battery cell has at least one electrical terminal provided on the top surface.

Optionally in some examples, including in at least one preferred example, the frame arrangements of the first and second battery layers are mechanically connected to one another by one or more first fasteners. A technical benefit may include that a rigid and robust connection is achieved in a cost-effective manner, e.g., allowing battery layers to be added and removed without damaging any elements of the battery pack.

Optionally in some examples, including in at least one preferred example, at least one first fastener of the one or more first fasteners is provided in complementary holes of the frame arrangements, wherein one of the complementary holes in one of the frame arrangements has a fastener opening which is accessible from a side face of the frame arrangement which is directed away from the frame arrangement in a direction along the first axis or in a direction along the second axis. A technical benefit may include facilitated manufacturing of the battery pack. A technical benefit may additionally or alternatively include that a more space-efficient frame arrangement is achieved.

Optionally in some examples, including in at least one preferred example, the fastener opening is provided in a recess on the side face. A technical benefit may include facilitated manufacturing of the battery pack. A technical benefit may additionally or alternatively include that a more space-efficient frame arrangement is achieved.

Optionally in some examples, including in at least one preferred example, the base plate which is arranged at the sealed connection interface is provided with respect to its frame arrangement such that the base plate extends along the third axis inside the frame arrangement. A technical benefit may include that a more robust and reliable connection to the frame arrangement is achieved.

Optionally in some examples, including in at least one preferred example, the base plate which is arranged at the sealed connection interface is provided with respect to its frame arrangement such that the base plate is completely inside the frame arrangement, as seen along the third axis. A technical benefit may include that the battery layer with the frame arrangement and the base plate may not be extending into another adjacent battery layer. This may result in facilitated packaging of the battery layers, e.g., when mounting/dismounting the battery layers to/from each other. A technical benefit may additionally or alternatively include that the risk of damaging parts of the battery pack during mounting/dismounting is reduced.

Optionally in some examples, including in at least one preferred example, the base plate which is arranged at the sealed connection interface is mechanically connected to its frame arrangement via one or more second fasteners. A technical benefit may include that a rigid and robust connection is achieved in a cost-effective manner, e.g., allowing the base plate to be added and removed without damaging the base plate and/or the frame arrangement.

Optionally in some examples, including in at least one preferred example, the base plate which is arranged at the sealed connection interface comprises one or more attachment flanges provided at an outer perimeter of the base plate, as seen in a sectional plane which is perpendicular to the third axis, wherein the base plate is mechanically connected to its frame arrangement via the one or more attachment flanges, and wherein the one or more attachment flanges extends at least partly in-between the frame arrangements of the first and second battery layers. A technical benefit may include that a more robust and rigid attachment of the base plate is achieved. In some examples, the base plate which is arranged at the sealed connection interface comprises two or more attachment flanges provided at the outer perimeter of the base plate, as seen in a sectional plane which is perpendicular to the third axis, wherein the two or more attachment flanges are offset from each other around the outer perimeter, and wherein the two or more attachment flanges extends at least partly in-between the frame arrangements of the first and second battery layers. A technical benefit may include that a more robust and rigid attachment of the base plate is achieved around the outer perimeter.

Optionally in some examples, including in at least one preferred example, at least one battery layer of the first and second battery layers comprises a crossbeam member extending along the second axis and mechanically connecting the pair of side walls, and wherein the crossbeam member is located between adjacent cell stacks. A technical benefit may include that improved crash protection is achieved.

Optionally in some examples, including in at least one preferred example, at least one battery layer of the first and second battery layers comprises a clamping member configured to clamp at least one battery cell towards the base plate the at least one battery cell is arranged on. A technical benefit may include that a robust attachment of the battery cells is achieved in the battery layer, e.g., mitigating the risk of the battery cells or the battery cell stacks moving during use, such as preventing battery cell vibrations during use.

Optionally in some examples, including in at least one preferred example, the clamping member is attached to the crossbeam member. A technical benefit may include that a robust and cost-effective configuration is achieved, e.g., facilitating manufacturing of the battery pack.

Optionally in some examples, including in at least one preferred example, the clamping member extends along the first axis such that the clamping member and the crossbeam member form a T-shape, as seen in a sectional plane which is perpendicular to the second axis, wherein at least one of the battery cells in each of adjacent cell stacks with respect to the crossbeam member are clamped between the clamping member and the base plate. A technical benefit may include that battery cells in the two adjacent cell stacks are clamped by the same clamping member. This may imply a more cost-effective and space-effective configuration.

Optionally in some examples, including in at least one preferred example, the battery pack comprises a pair of covers, wherein each one of the pair of covers is fixed to one of the frame arrangements such that the plurality of battery layers are located between the pair of covers along the third axis and each of the plurality of cell stacks are enclosed by the frame arrangements and the pair of covers. A technical benefit may include that a closed battery pack structure is achieved.

Optionally in some examples, including in at least one preferred example, the battery pack comprises a pair of outer gaskets, wherein each one of the pair of outer gaskets is located between one of the covers and the frame arrangement that the cover is fixed to, and wherein each one of the pair of outer gaskets is configured to seal between the cover and the frame arrangement. A technical benefit may include that a closed and sealed battery pack structure is achieved.

Optionally in some examples, including in at least one preferred example, the battery pack comprises an intermediate gasket, wherein the intermediate gasket is located between the frame arrangements of the first and second battery layers, and wherein the intermediate gasket is configured to seal between the frame arrangements. A technical benefit may include that an improved sealed connection interface between the frame arrangements is achieved. In some examples, the intermediate gasket forms part of the sealed connection interface as disclosed herein.

Optionally in some examples, including in at least one preferred example, the base plate of at least one of the first and second battery layers is a cooling plate comprising at least one coolant conduit for coolant. A technical benefit may include that the battery cells of the first and/or second battery layers may be efficiently cooled. This may result in improved cooling, more effective cooling, and/or cooling requiring fewer cooling elements for the battery cells.

Optionally in some examples, including in at least one preferred example, the cooling plate comprises a coolant inlet and a coolant outlet fluidly connected to the at least one coolant conduit. In some examples, the coolant inlet and/or outlet are provided at at least one of the pair of end members, such as on one end side of the battery pack.

Optionally in some examples, including in at least one preferred example, for at least one battery layer of the first and second battery layers, the at least one battery layer comprises an outer spacer, wherein the outer spacer is located between one of the side walls and one of the cell stacks, and wherein the outer spacer is configured to deform upon swelling of the cell stack. A technical benefit may include that the cell stack is allowed to swell during use. This may result in more reliable operation of the battery pack.

Optionally in some examples, including in at least one preferred example, the at least one battery layer comprises an intermediate spacer, wherein the intermediate spacer is located between two of the battery cells in the cell stack, and wherein the intermediate spacer is configured to deform upon swelling of the cell stack. A technical benefit may include that the cell stack more easily will be allowed to swell during use. This may result in more reliable operation of the battery pack.

Optionally in some examples, including in at least one preferred example, the cell stack is compressed in-between the pair of side walls of the frame arrangement via the outer spacer. A technical benefit may include that a compact and reliable packaging is achieved, e.g., resulting in high energy density.

Optionally in some examples, including in at least one preferred example, for at least one battery layer of the first and second battery layers, a channel is formed in a side wall of at least one of the pair of side walls, the channel being configured to guide gases vented from the battery cells towards at least one of the end members. A technical benefit may include that gases from the battery cells are efficiently vented out from the battery pack.

Optionally in some examples, including in at least one preferred example, the battery pack comprises a vent unit, wherein the vent unit is located at one of the end members and configured to exhaust gas guided via the channel from the battery pack. A technical benefit may include that gases from the battery cells are efficiently vented out from the battery pack from one end of the battery pack.

Optionally in some examples, including in at least one preferred example, the battery pack comprises at least one filter unit, wherein the filter unit is in fluid communication with the channel and the vent unit, and wherein the filter unit is configured for particle trapping. A technical benefit may include that particles from the battery cells are efficiently trapped in the filter unit during operation.

Optionally in some examples, including in at least one preferred example, for each of the first and second battery layers, the plurality of cell stacks are arranged along the first axis such that an auxiliary volume is formed between one of the end members and the plurality of cell stacks. A technical benefit may include that auxiliary components, such as cooling components, electrical components etc., may be accommodated in the auxiliary volume.

Optionally in some examples, including in at least one preferred example, the first and second battery layers are configured such that the auxiliary volumes together form a common open side space which extends along the third axis between the first and second battery layers. A technical benefit may include that by configuring the battery pack with a common open side space which is enclosed by the frame arrangements, more options for routing any cables, coolant conduits, etc. may be achieved.

According to a second aspect of the disclosure, a vehicle is provided. The vehicle comprises a battery pack according to any example of the first aspect of the disclosure. Advantages and benefits of the second aspect of the disclosure are analogous to the advantages and benefits of the first aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2a** is an exemplary battery pack in a side view according to an example.
**FIG 2b** is an exemplary battery pack in a side view according to an example.
**FIG. 3** is an exemplary battery layer of a battery pack in a top view according to an example.
**FIG. 4a** is an exemplary battery layer of a battery pack in a perspective view according to an example.
**FIG. 4b** is an exemplary battery layer of a battery pack in a sectional view according to an example.
**FIG. 4c** is an exemplary battery layer of a battery pack in a perspective view according to an example.
**FIG. 5a** is an exemplary battery layer of a battery pack in a perspective view according to an example.
**FIG. 5b** is the battery layer of FIG. 5a in an enlarged view.
**FIG. 6a** **is** an exemplary battery layer of a battery pack in a top view according to an example.
**FIG. 6b** is an exemplary battery pack in a side view according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to provide a battery pack which is robust, reliable, cost-effective and/or space efficient. Additionally, an aim of the present disclosure is to provide an improved battery pack and/or vehicle, which at least partly alleviate one or more drawbacks of the prior art, or which at least are suitable alternatives. A technical benefit of the battery pack as disclosed herein may include that the frame arrangements as disclosed herein provide an efficient protection for the battery cells, such as the frame arrangements of the plurality of battery layers may together at least partly form an outer cover of the battery pack which is sealed from an external environment. For example, the battery pack as disclosed herein may result in an improved cell to pack configuration, e.g., mitigating a need of using separate battery modules in the battery pack. Additionally, or alternatively, by the battery pack as disclosed herein, a cell to pack configuration may be achieved in which a risk of leakage into the battery pack at the intersection between the battery layers is mitigated. By way of example, by arranging the base plate which is arranged at the sealed connection interface so that it is completely provided inside the battery pack, i.e., also inside the sealed connection interface, a more reliable cell to pack configuration may be achieved.

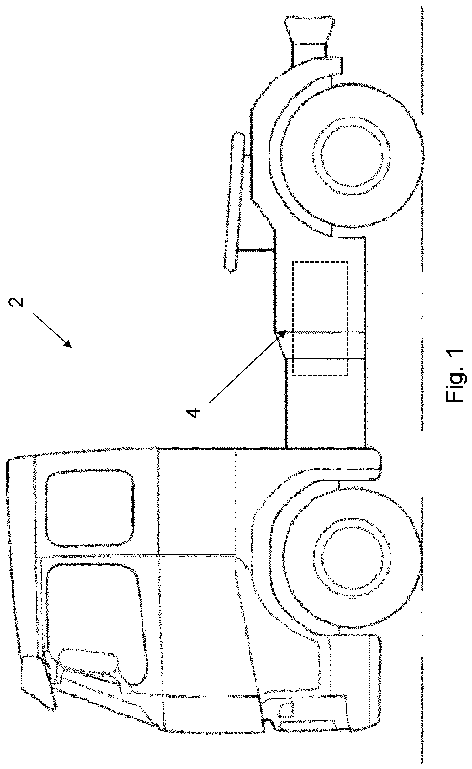

**FIG. 1** is an exemplary vehicle 2 in a side view according to an example. The vehicle 2 is in this example a truck, and more particularly a towing truck for towing one or more trailers (not shown). It shall however be noted that the vehicle may be any other type of vehicle, such as another type of truck, a bus, a passenger car, a marine vessel, or construction equipment, such as a wheel loader or an excavator. The vehicle 2 comprises a battery pack 4 according to an example disclosed herein. The battery pack 4 may at least partly be used for driving one or more electric motors (not shown) of the vehicle 2. The vehicle 2 may accordingly be an electric vehicle or a hybrid vehicle, i.e., a vehicle which at least partly uses electric power for propulsion. The battery pack 4 as disclosed herein may also be used in a stationary unit, such as a building and/or any stationary machinery.

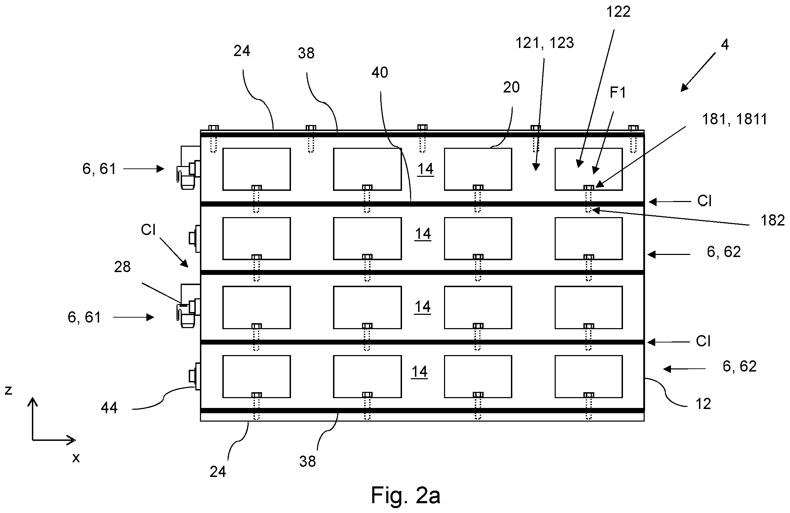

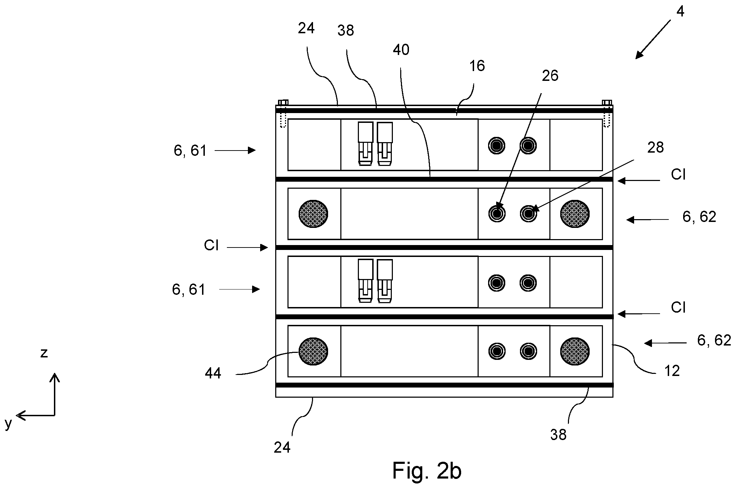

**FIG. 2a** is an exemplary battery pack 4 in a side view according to an example and **FIG. 2b** is the battery pack in FIG. 2a in another side view according to an example. The battery pack 4 in FIGS. 2a-b may for example be the battery pack 4 shown in FIG. 1.

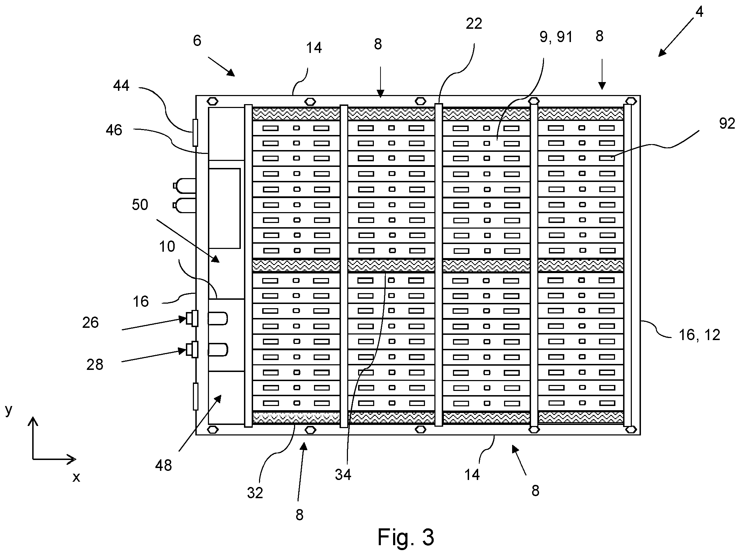

**FIG.** 3 is an exemplary battery layer 6 of a battery pack 4 in a top view according to an example. For example, the battery layer 6 in FIG. 3 may be a battery layer 6 of the battery pack 4 shown in FIGS. 2a-b.

With reference to e.g. FIGS. 2a-b and FIG. 3, a battery pack 4 is shown. The battery pack 4 has a first extension along a first axis x, a second extension along a second axis y, and a third extension along a third axis z, wherein the first, second, and third axes x,y,z are perpendicular. By way of example, the first axis x may correspond to a longitudinal axis, the second axis y may correspond to a width axis and the third axis z may correspond to a height axis. The axes x, y, z may correspond to a Cartesian coordinate system. In some examples, the height axis z may correspond to a height axis of the vehicle 2 when the battery pack 4 is provided in the vehicle 2. The height axis z may in some examples be denoted a vertical axis. However, it shall be noted that the battery pack 4 may also be oriented differently in the vehicle 2, or in any other stationary unit.

The battery pack 4 comprises a plurality of battery layers 6 stacked on top of each other along the third axis z. In the shown example, four battery layers 6 are depicted. However, any number of two or more layers may be used. The configuration of the respective battery layers 6 may be similar, identical, or different. Each battery layer 6 preferably comprises a plurality of cell stacks 8. Each cell stack 8 comprises a plurality of battery cells 9 stacked together.

In the FIG. 3 example, the cell stacks 8 of the battery layer 6 comprises a plurality of prismatic battery cells 9. The prismatic battery cells 9 are box-shaped and the respective battery cell 9 comprises a top surface 91, which as shown may face away from the battery layer 6 in a direction along the third axis z, such as in an upward direction. The top surface 91 may as shown comprise at least one electrical terminal 92. The electrical terminals 92 of the battery cells 8 are electrically connected in series and/or in parallel such that a battery pack 4 with a desired voltage level is achieved.

As shown in FIG. 3, the plurality of battery cells 9 of the respective cell stack 8 may be stacked along the second axis y, and the plurality of cell stacks 8 may be arranged along the first axis x. In the shown example, four cell stacks 8 are arranged along the first axis x.

With reference to e.g. FIGS. 2a-b and FIG 3, a respective battery layer 6 of at least a first and a second adjacently stacked battery layer 61, 62 of the plurality of battery layers 6 comprises:
- a base plate 10, wherein the plurality of cell stacks 8 are arranged on the base plate 10, and
- a frame arrangement 12, mechanically connected to the base plate 10, and enclosing the plurality of cell stacks 8, as seen in a sectional plane which is perpendicular to the third axis z

The frame arrangement 12 comprises:
- a pair of side walls 14 extending along the first axis x, wherein the cell stacks 8 are located between the pair of side walls 14 along the second axis y, and
- a pair of end members 16, extending along the second axis y, and mechanically connecting the pair of side walls 14, and wherein the plurality of cell stacks 8 are located between the pair of end members 16.

As shown in e.g. FIGS. 2a-b, the first and second battery layers 61, 62 may be connected via a sealed connection interface CI. In the shown example, there is a sealed connection interface CI between each two adjacent battery layers 6.

By a connection interface is herein meant an interface between two adjacent battery layers at which the battery layers are contacting each other. Accordingly, a sealed connection interface means that the connection interface is sealed such that a risk of leakage through the connection interface is reduced.

The base plate 10 of one of the first and second battery layers 6 may be arranged at the sealed connection interface CI, and the sealed connection interface CI may be configured such that:
the first and second battery layers 61, 62 are mechanically connected to one another via their frame arrangements 12, and
the sealed connection interface CI is completely enclosing the base plate 10 which is arranged at the sealed connection interface CI, as seen in a sectional plane which is perpendicular to the third axis z.

The frame arrangements 12 of the first and second battery layers 61, 62 may be mechanically connected to one another by one or more first fasteners F 1. The one or more first fasteners F 1 may be screws, bolts, rivets, or any other fastener. In the shown example, the one or more first fasteners F1 have a longitudinal direction extending along the third axis z.

At least one first fastener F1 of the one or more first fasteners F1, such as all first fasteners F1, may as shown be provided in complementary holes 181, 182 of the frame arrangements 12, wherein one of the complementary holes 181 in one of the frame arrangements has a fastener opening 1811 which is accessible from a side face 121 of the frame arrangement 12 which is directed away from the frame arrangement 12 in a direction along the first axis x or, as shown in FIG. 2a, in a direction along the second axis y.

The fastener opening 1811 may as shown in FIG. 2a be provided in a recess 122 on the side face 121. In the shown example, each fastener opening is provided in a respective recess. In other examples, there may be more than one fastener opening in each recess. The recess 122 may as shown be an indentation from an otherwise planar wall surface 123 of the frame arrangement 12.

As shown in FIG. 3, at least one battery layer 6 of the first and second battery layers 61, 62 may comprise a clamping member 22 configured to clamp at least one battery cell 9 towards the base plate 10 the at least one battery cell 9 is arranged on. In the shown example, the clamping member 22 is configured to clamp each battery cell 9 in at least one cell stack 8.

With reference to e.g. FIGS. 2a-b, the battery pack 4 may as shown comprise a pair of covers 24. Each one of the pair of covers 24 is fixed to one of the frame arrangements 12 such that the plurality of battery layers 6 are located between the pair of covers 24 along the third axis z and each of the plurality of cell stacks 8 are enclosed by the frame arrangements 12 and the pair of covers 24.

The battery pack 4 may further comprise a pair of outer gaskets 38. Each one of the pair of outer gaskets 38 is located between one of the covers 24 and the frame arrangement 12 that the cover 24 is fixed to, and each one of the pair of outer gaskets 38 is configured to seal between the cover 24 and the frame arrangement 12.

The battery pack 4 may as shown further comprise an intermediate gasket 40. The intermediate gasket 40 is located between the frame arrangements 12 of the first and second battery layers 61, 62, and the intermediate gasket 40 is configured to seal between the frame arrangements 12. In the shown example, the intermediate gasket 40 forms part of the sealed connection interface CI.

The base plate 10 of at least one of the first and second battery layers 61, 62 may be a cooling plate 10 comprising at least one coolant conduit 26, 28 for coolant. In the example shown in e.g. FIGS. 2a-b, the cooling plate 10 comprises a coolant inlet 26 and a coolant outlet 28 fluidly connected to the at least one coolant conduit of the cooling plate 10. The base plate 10 may hence not only be a structural member for providing structural support for the battery cells 9, but also it may be a cooling plate for the battery cells 9.

With reference to FIG. 3, it is shown that at least one battery layer 6 of the first and second battery layers 61, 62 may comprise an outer spacer 32. The outer spacer 32 is located between one of the side walls 14 and one of the cell stacks 8, and the outer spacer 32 is configured to deform upon swelling of the cell stack 8. Accordingly, the outer spacer 322 is preferably made of material which is elastic, such as by a polymer based material. In the shown example, one outer spacer 32 is provided on each outer side of the cell stack 8.

The at least one battery layer 6 may as shown further comprise an intermediate spacer 34. The intermediate spacer 34 is located between two of the battery cells 9 in the cell stack 8, and the intermediate spacer 34 is configured to deform upon swelling of the cell stack 8.

The cell stack 8 may be compressed in-between the pair of side walls 14 of the frame arrangement 12 via the outer spacer 32.

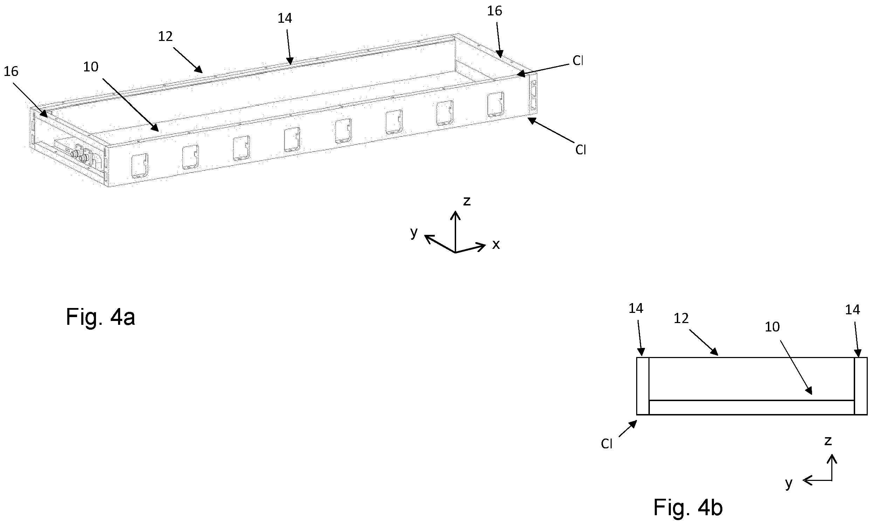

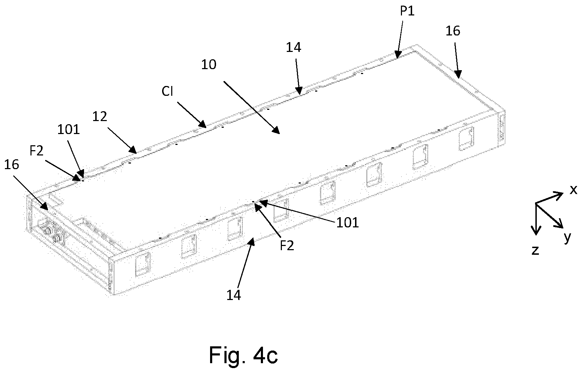

**FIG. 4a** is an exemplary portion of a battery layer 6 of a battery pack 4 in a perspective view according to an example. **FIG. 4b** is an exemplary portion of a battery layer 6 of a battery pack 4 in a sectional view according to an example. The sectional view is perpendicular to the first axis x. **FIG. 4c** is an exemplary portion of a battery layer 6 of a battery pack 4 in a perspective view according to an example. The battery layer 6 in FIGS. 4a-c may be any one of the battery layers 6 shown in FIGS. 2a-b and FIG. 3.

With reference to e.g. FIG. 4b, the base plate 10 which is arranged at the sealed connection interface CI may be provided with respect to its frame arrangement 12 such that the base plate 10 extends along the third axis z inside the frame arrangement 12. In some examples, as shown in FIG. 4b, the base plate 10 which is arranged at the sealed connection interface CI may be provided with respect to its frame arrangement 12 such that the base plate 10 is completely inside the frame arrangement 12, as seen along the third axis z.

FIG. 4c depicts an example of a frame arrangement 12 and an associated base plate 10 for a battery layer 6 in an upside-down view. With reference to FIG. 4c, the base plate 10 which is arranged at the sealed connection interface CI may be mechanically connected to its frame arrangement 12 via one or more second fasteners F2. The one or more second fasteners F2 may be screws, bolts, rivets, or any other fastener. In the shown example, the one or more second fasteners F2 are provided in respective holes in the pair of side walls 14 of the frame arrangement 12. By the term "its frame arrangement" is herein meant the frame arrangement which is mechanically connected to the base plate of the same battery layer.

The base plate 10 which is arranged at the sealed connection interface CI may as further shown comprise one or more attachment flanges 101 provided at an outer perimeter P1 of the base plate 10, as seen in a sectional plane which is perpendicular to the third axis z. The base plate 10 may hence be mechanically connected to its frame arrangement 12 via the one or more attachment flanges 101, wherein the one or more attachment flanges 101 extends at least partly in-between the frame arrangements 12 of the first and second battery layers 61, 62. In the shown example, the base plate 10 which is arranged at the sealed connection interface CI comprises two or more attachment flanges 101 provided at the outer perimeter P1 of the base plate 10, as seen in a sectional plane which is perpendicular to the third axis z, wherein the two or more attachment flanges 101 are offset from each other around the outer perimeter P1, and wherein the two or more attachment flanges 101 extends at least partly in-between the frame arrangements 12 of the first and second battery layers 61, 62. The attachment flanges 101 are in the FIG. 4c example arranged to be provided in-between the side walls 14 of the frame arrangements 12. As may be gleaned, the attachment flanges 101 may be provided in recesses in at least one of the adjacent frame arrangements 12.

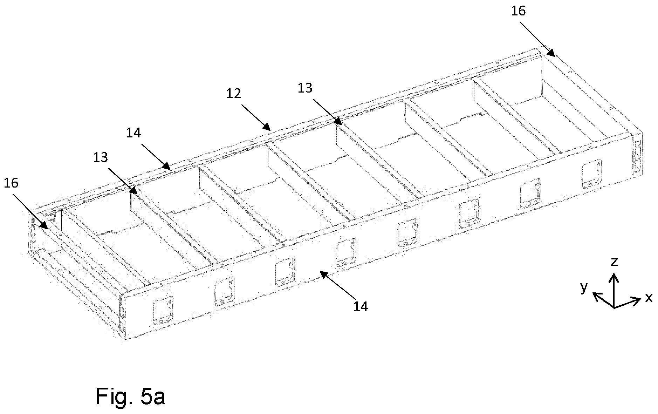

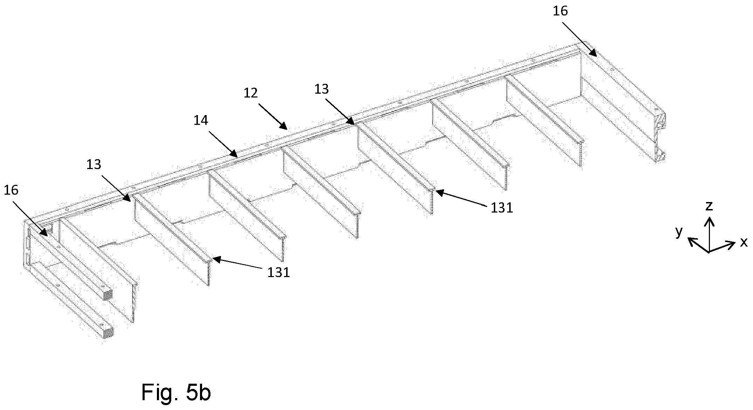

**FIG. 5a** is an exemplary portion of a battery layer 6 of a battery pack 4 in a perspective view according to an example. **FIG. 5b** is the battery layer 6 of FIG. 5a in an enlarged view. The battery layer 6 in FIGS. 5a-b may be any one of the battery layers in FIGS. 2-4. The battery layer 6 in FIGS. 5a-b are shown in an upside view.

FIGS. 5a-b shows that at least one battery layer 6 of the first and second battery layers 61, 62 may comprise a crossbeam member 13 which extends along the second axis y and mechanically connects the pair of side walls 14. The crossbeam member 13 is located between adjacent cell stacks 8 (not shown in FIGS. 5a-b).

As shown in FIG. 5b, at least one crossbeam member 13 may comprise a clamping member 131 configured to clamp at least one battery cell 9 towards the base plate 10 (not shown in FIGS. 5a-b) the at least one battery cell 9 is arranged on. Accordingly, a clamping member 131 may be attached to the crossbeam member 13. In the shown example, the clamping member 131 and the crossbeam member 13 are made in one single piece. In other examples, the clamping member may be attached to the crossbeam member by a fastener or a weld.

As further shown in FIG. 5b, the clamping member 131 may extend along the first axis x such that the clamping member 131 and the crossbeam member 13 form a T-shape, as seen in a sectional plane which is perpendicular to the second axis y, wherein at least one of the battery cells 9 in each of adjacent cell stacks 8 with respect to the crossbeam member 13 are clamped between the clamping member 13 and the base plate 10.

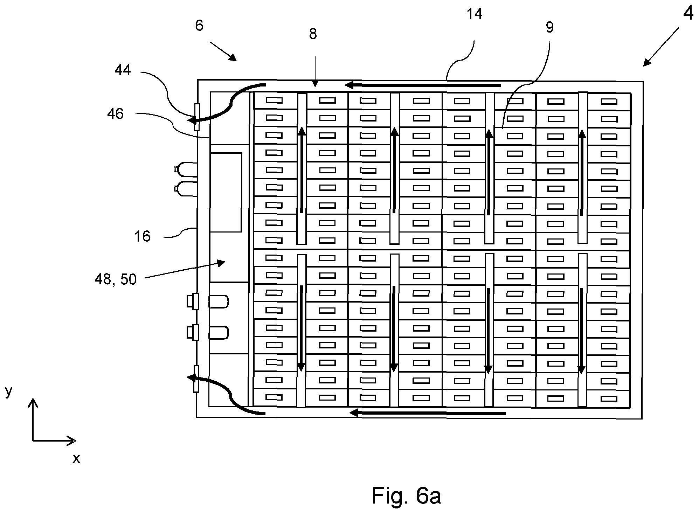

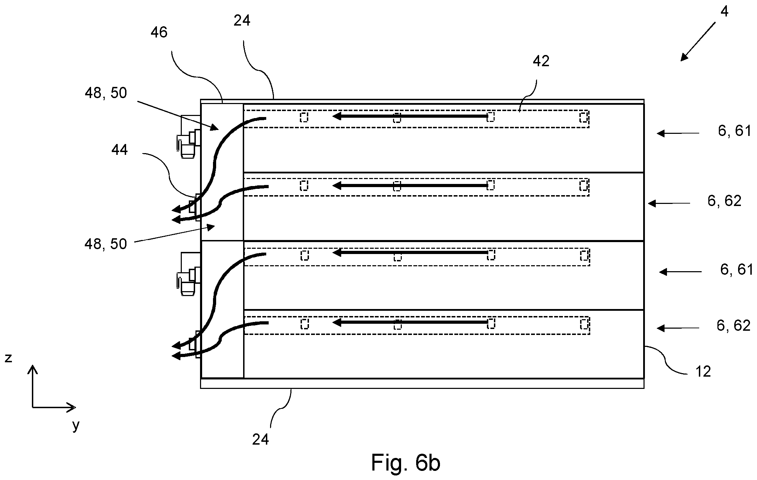

**FIG. 6a** is an exemplary battery layer 6 of a battery pack 4 in a top view according to an example. **FIG. 6b** is an exemplary battery pack 4 in a side view according to an example. The battery layer 6 and battery pack 4 in FIGS. 6a-b may for example be the battery pack 4 and battery layers 6 as shown in any one of FIGS. 2-5.

As shown in FIG. 6b, for at least one battery layer 6 of the first and second battery layers 61, 62, a channel 42 may be formed in a side wall 14 of at least one of the pair of side walls 14. The channel 42 may be configured to guide gases vented from the battery cells 9 towards at least one of the end members 16. In FIGS. 6a-b, the guiding path for gases are indicated by flow arrows directed from the battery pack 4 to an outside thereof.

At least one of the battery layers 6 may as shown comprise a vent unit 44, wherein the vent unit 44 is located at one of the end members 16 and configured to exhaust gas guided via the channel 42 from the battery pack 4. At least one battery layer 6 may as further shown comprise at least one filter unit 46, wherein the filter unit 46 is in fluid communication with the channel 42 and the vent unit 44, and wherein the filter unit 46 is configured for particle trapping.

FIGS. 6a-b further depicts that for each of the first and second battery layers 61, 62, the plurality of cell stacks 8 may be arranged along the first axis x such that an auxiliary volume 48 is formed between one of the end members 16 and the plurality of cell stacks 8. The first and second battery layers 6 may as further shown be configured such that the auxiliary volumes 48 together form a common open side space 50 which extends along the third axis z between the first and second battery layers 61, 62. In some examples, auxiliary volumes 48 of all battery layers 6 in the battery pack 4 may together form a common open side space which extends along the third axis z between the battery layers 6.

In the following, possible features and feature combinations of the present disclosure are presented as a list of Examples.

Example 1: A battery pack (4), having a first extension along a first axis (x), a second extension along a second axis (y), and a third extension along a third axis (z), wherein the first, second, and third axes (x, y, z) are perpendicular, the battery pack (4) comprising a plurality of battery layers (6) stacked on top of each other along the third axis (z), wherein a respective battery layer of at least a first and a second adjacently stacked battery layer (6, 6) of the plurality of battery layers (6) comprises:
- a plurality of cell stacks (8), each comprising a plurality of battery cells (9) stacked together,
- a base plate (10), wherein the plurality of cell stacks (8) are arranged on the base plate (10),
- a frame arrangement (12), mechanically connected to the base plate (10), and enclosing the plurality of cell stacks (8), as seen in a sectional plane which is perpendicular to the third axis (z),
wherein the frame arrangement (12) comprises:
- a pair of side walls (14) extending along the first axis (x), wherein the cell stacks (8) are located between the pair of side walls (14) along the second axis (y),
- a pair of end members (16), extending along the second axis (y), and mechanically connecting the pair of side walls (14), and wherein the plurality of cell stacks (8) are located between the pair of end members (16).

Example 2: The battery pack according to Example 1, wherein the first and second battery layers (6) are connected via a sealed connection interface (CI),
wherein the base plate (10) of one of the first and second battery layers (6) is arranged at the sealed connection interface (CI), and
wherein the sealed connection interface (CI) is configured such that:
the first and second battery layers (6) are mechanically connected to one another via their frame arrangements (12), and
the sealed connection interface (CI) is completely enclosing the base plate (10) which is arranged at the sealed connection interface (CI), as seen in a sectional plane which is perpendicular to the third axis (z).

Example 3: The battery pack (4) of Example 1 or 2, wherein, for at least one battery layer (6) of the first and second battery layers, the plurality of battery cells (9) of the respective cell stack are stacked along the second axis (y), and wherein the plurality of cell stacks (8) are arranged along the first axis (x).

Example 4: The battery pack (4) of any of the preceding Examples, wherein the frame arrangements (12) of the first and second battery layers (6) are mechanically connected to one another by one or more first fasteners (F1).

Example 5: The battery pack (4) according to Example 4, wherein at least one first fastener (F1) of the one or more first fasteners (F1) is provided in complementary holes (181, 182) of the frame arrangements (12), wherein one of the complementary holes (181) in one of the frame arrangements has a fastener opening (1811) which is accessible from a side face (121) of the frame arrangement (12) which is directed away from the frame arrangement (12) in a direction along the first axis (x) or in a direction along the second axis (y).

Example 6: The battery pack (4) according to Example 5, wherein the fastener opening (1811) is provided in a recess (122) on the side face (121).

Example 7: The battery pack (4) of any of the preceding Examples, wherein the base plate (10) which is arranged at the sealed connection interface (CI) is provided with respect to its frame arrangement (12) such that the base plate (10) extends along the third axis (z) inside the frame arrangement (12).

Example 8: The battery pack (4) according to Example 7, wherein the base plate (10) which is arranged at the sealed connection interface (CI) is provided with respect to its frame arrangement (12) such that the base plate (10) is completely inside the frame arrangement (12), as seen along the third axis (z).

Example 9: The battery pack (4) of any of the preceding Examples, wherein the base plate (10) which is arranged at the sealed connection interface (CI) is mechanically connected to its frame arrangement (12) via one or more second fasteners (F2).

Example 10: The battery pack (4) of any of the preceding Examples, wherein the base plate (10) which is arranged at the sealed connection interface (CI) comprises one or more attachment flanges (101) provided at an outer perimeter (P1) of the base plate (10), as seen in a sectional plane which is perpendicular to the third axis (z), wherein the base plate (10) is mechanically connected to its frame arrangement via the one or more attachment flanges (101), and wherein the one or more attachment flanges extends at least partly in-between the frame arrangements (12) of the first and second battery layers (6).

Example 11: The battery pack (4) of any of the preceding Examples, wherein at least one battery layer (6) of the first and second battery layers comprises a crossbeam member (13) extending along the second axis (y) and mechanically connecting the pair of side walls (14), and wherein the crossbeam member (13) is located between adjacent cell stacks (8).

Example 12: The battery pack (4) of any of the preceding Examples, wherein at least one battery layer of the first and second battery layers (6) comprises a clamping member (22, 131) configured to clamp at least one battery cell (9) towards the base plate (10) the at least one battery cell (9) is arranged on.

Example 13: The battery pack according to Examples 11 and 12, wherein the clamping member (131) is attached to the crossbeam member (13).

Example 14: The battery pack according to Example 13, wherein the clamping member (131) extends along the first axis (x) such that the clamping member (131) and the crossbeam member (13) form a T-shape, as seen in a sectional plane which is perpendicular to the second axis (y), wherein at least one of the battery cells (9) in each of adjacent cell stacks (8) with respect to the crossbeam member (13) are clamped between the clamping member (13) and the base plate (10).

Example 15: The battery pack (4) of any of the preceding Examples, comprising a pair of covers (24), wherein each one of the pair of covers (24) is fixed to one of the frame arrangements (12) such that the plurality of battery layers (6) are located between the pair of covers (24) along the third axis (z) and each of the plurality of cell stacks (8) are enclosed by the frame arrangements (12) and the pair of covers (24).

Example 16: The battery pack (4) of Example 15, comprising a pair of outer gaskets (38), wherein each one of the pair of outer gaskets (38) is located between one of the covers (24) and the frame arrangement (12) that the cover (24) is fixed to, and wherein each one of the pair of outer gaskets (38) is configured to seal between the cover (24) and the frame arrangement (12).

Example 17: The battery pack (4) of any of the preceding Examples, comprising an intermediate gasket (40), wherein the intermediate gasket (40) is located between the frame arrangements (12) of the first and second battery layers (6), and wherein the intermediate gasket (40) is configured to seal between the frame arrangements (12).

Example 18: The battery pack (4) of any of the preceding Examples, wherein the base plate (10) of at least one of the first and second battery layers (6) is a cooling plate (10) comprising at least one coolant conduit (26, 28) for coolant.

Example 19: The battery pack (4) of Example 18, wherein the cooling plate (10) comprises a coolant inlet (26) and a coolant outlet (28) fluidly connected to the at least one coolant conduit.

Example 20: The battery pack (4) of any of the preceding Examples, wherein, for at least one battery layer (6) of the first and second battery layers, the at least one battery layer comprises an outer spacer (32), wherein the outer spacer (32) is located between one of the side walls (14) and one of the cell stacks (8), and wherein the outer spacer (32) is configured to deform upon swelling of the cell stack (8).

Example 21: The battery pack (4) according to Example 20, wherein the at least one battery layer comprises an intermediate spacer (34), wherein the intermediate spacer (34) is located between two of the battery cells (9) in the cell stack (8), and wherein the intermediate spacer (34) is configured to deform upon swelling of the cell stack (8).

Example 22: The battery pack (4) according to Example 20 or 21, wherein the cell stack (8) is compressed in-between the pair of side walls (14) of the frame arrangement (12) via the outer spacer (32).

Example 23: The battery pack (4) of any of the preceding Examples, wherein, for at least one battery layer (6) of the first and second battery layers, a channel (42) is formed in a side wall of at least one of the pair of side walls (14), the channel (42) being configured to guide gases vented from the battery cells (9) towards at least one of the end members (16).

Example 24: The battery pack (4) of Example 23, comprising a vent unit (44), wherein the vent unit (44) is located at one of the end members (16) and configured to exhaust gas guided via the channel (42) from the battery pack (4).

Example 25: The battery pack (4) of Example 24, comprising at least one filter unit (46), wherein the filter unit (46) is in fluid communication with the channel (42) and the vent unit (44), and wherein the filter unit (46) is configured for particle trapping.

Example 26: The battery pack (4) of any of the preceding Examples, wherein, for each of the first and second battery layers (6), the plurality of cell stacks (8) are arranged along the first axis (x) such that an auxiliary volume (48) is formed between one of the end members (16) and the plurality of cell stacks (8).

Example 27: The battery pack (4) of Example 26, wherein the first and second battery layers (6) are configured such that the auxiliary volumes (48) together form a common open side space (50) which extends along the third axis (z) between the first and second battery layers (6).

Example 28: A vehicle comprising the battery pack according to any of Examples 1-27.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery pack (4), having a first extension along a first axis (x), a second extension along a second axis (y), and a third extension along a third axis (z), wherein the first, second, and third axes (x,y,z) are perpendicular, the battery pack (4) comprising a plurality of battery layers (6) stacked on top of each other along the third axis (z), wherein a respective battery layer of at least a first and a second adjacently stacked battery layer (61, 62) of the plurality of battery layers (6) comprises:
- a plurality of cell stacks (8), each comprising a plurality of battery cells (9) stacked together,
- a base plate (10), wherein the plurality of cell stacks (8) are arranged on the base plate (10),
- a frame arrangement (12), mechanically connected to the base plate (10), and enclosing the plurality of cell stacks (8), as seen in a sectional plane which is perpendicular to the third axis (z),
wherein the frame arrangement (12) comprises:
- a pair of side walls (14) extending along the first axis (x), wherein the cell stacks (8) are located between the pair of side walls (14) along the second axis (y),
- a pair of end members (16), extending along the second axis (y), and mechanically connecting the pair of side walls (14), and wherein the plurality of cell stacks (8) are located between the pair of end members (16),
wherein the first and second battery layers (61, 62) are connected via a sealed connection interface (CI),
wherein the base plate (10) of one of the first and second battery layers (61, 62) is arranged at the sealed connection interface (CI), and
wherein the sealed connection interface (CI) is configured such that:
the first and second battery layers (61, 62) are mechanically connected to one another via their frame arrangements (12), and
the sealed connection interface (CI) is completely enclosing the base plate (10) which is arranged at the sealed connection interface (CI), as seen in a sectional plane which is perpendicular to the third axis (z).

2. The battery pack (4) of claim 1, wherein, for at least one battery layer (6) of the first and second battery layers, the plurality of battery cells (9) of the respective cell stack are stacked along the second axis (y), and wherein the plurality of cell stacks (8) are arranged along the first axis (x).

3. The battery pack (4) of any of the preceding claims, wherein the frame arrangements (12) of the first and second battery layers (6) are mechanically connected to one another by one or more first fasteners (F 1).

4. The battery pack (4) according to claim 3, wherein at least one first fastener (F1) of the one or more first fasteners (F1) is provided in complementary holes (181, 182) of the frame arrangements (12), wherein one of the complementary holes (181) in one of the frame arrangements has a fastener opening (1811) which is accessible from a side face (121) of the frame arrangement (12) which is directed away from the frame arrangement (12) in a direction along the first axis (x) or in a direction along the second axis (y).

5. The battery pack (4) of any of the preceding claims, wherein the base plate (10) which is arranged at the sealed connection interface (CI) is provided with respect to its frame arrangement (12) such that the base plate (10) extends along the third axis (z) inside the frame arrangement (12).

6. The battery pack (4) according to claim 5, wherein the base plate (10) which is arranged at the sealed connection interface (CI) is provided with respect to its frame arrangement (12) such that the base plate (10) is completely inside the frame arrangement (12), as seen along the third axis (z).

7. The battery pack (4) of any of the preceding claims, wherein the base plate (10) which is arranged at the sealed connection interface (CI) is mechanically connected to its frame arrangement (12) via one or more second fasteners (F2).

8. The battery pack (4) of any of the preceding claims, wherein the base plate (10) which is arranged at the sealed connection interface (CI) comprises one or more attachment flanges (101) provided at an outer perimeter (P1) of the base plate (10), as seen in a sectional plane which is perpendicular to the third axis (z), wherein the base plate (10) is mechanically connected to its frame arrangement via the one or more attachment flanges (101), and wherein the one or more attachment flanges extends at least partly in-between the frame arrangements (12) of the first and second battery layers (6).

9. The battery pack (4) of any of the preceding claims, wherein at least one battery layer (6) of the first and second battery layers comprises a crossbeam member (13) extending along the second axis (y) and mechanically connecting the pair of side walls (14), and wherein the crossbeam member (13) is located between adjacent cell stacks (8).

10. The battery pack (4) of any of the preceding claims, wherein at least one battery layer of the first and second battery layers (6) comprises a clamping member (22, 131) configured to clamp at least one battery cell (9) towards the base plate (10) the at least one battery cell (9) is arranged on.

11. The battery pack according to claims 9 and 10, wherein the clamping member (131) is attached to the crossbeam member (13).

12. The battery pack according to claim 11, wherein the clamping member (131) extends along the first axis (x) such that the clamping member (131) and the crossbeam member (13) form a T-shape, as seen in a sectional plane which is perpendicular to the second axis (y), wherein at least one of the battery cells (9) in each of adjacent cell stacks (8) with respect to the crossbeam member (13) are clamped between the clamping member (13) and the base plate (10).

13. The battery pack (4) of any of the preceding claims, wherein, for at least one battery layer (6) of the first and second battery layers, the at least one battery layer comprises an outer spacer (32), wherein the outer spacer (32) is located between one of the side walls (14) and one of the cell stacks (8), and wherein the outer spacer (32) is configured to deform upon swelling of the cell stack (8).

14. The battery pack (4) according to claim 13, wherein the cell stack (8) is compressed in-between the pair of side walls (14) of the frame arrangement (12) via the outer spacer (32).

15. A vehicle comprising the battery pack according to any of claims 1-14.
